# EUROPÄISCHE PATENTSCHRIFT

(11) **EP 2 919 087 B1**
(45) Veröffentlichungstag und Bekanntmachung des Hinweises auf die Patenterteilung: **19.04.2017**
(21) Anmeldenummer: 15158627.8
(22) Anmeldetag: 11.03.2015
(51) Int. Cl.: G05D 16/04, F16K 17/04, F16K 17/06

(54) **GASDRUCKREGLER**
Gas pressure regulator
Régulateur de pression de gaz

(30) Priorität: 12.03.2014 AT 5003814 U
(43) Veröffentlichungstag der Anmeldung: 16.09.2015
(73) Patentinhaber: Heat Wärmetechnische Anlagen Ges.m.b.H, 1120 Wien (AT)
(72) Erfinder: Kiss, Tibor, 2362 Biedermannsdorf (AT)
(74) Vertreter: Sonn & Partner Patentanwälte

(56) Entgegenhaltungen:
- WO-A1-01/57422
- WO-A1-2005/040577
- DE-B3-102004 006 096
- US-A- 5 782 259
- US-A1- 2010 147 400

## Beschreibung

Die Erfindung betrifft einen Gasdruckregler zur Reduktion des Eingangsdrucks eines Gases auf einen konstanten Ausgangsdruck, mit einem Gehäuse mit einem Eingang, einem Ausgang und einem dazwischen angeordneten Sicherheitsabsperrventil, und mit einem ausgangsseitig am Gehäuse angeordneten Sicherheitsabblaseventil.

Derartige Gasdruckregler dienen dazu, den von einer Gashauptleitung herrührenden Gasdruck von bis zu 10 bar auf einen vorgeschriebenen konstanten Ausgangsdruck zu regeln. Zu diesem Zweck wird der Eingangsdruck des Gases üblicherweise in zwei Stufen auf den gewünschten konstanten Ausgangsdruck reduziert. Derartige Gasdruckregler werden für die Gasversorgung von Wohn-, Büro-, Sozialgebäuden und auch industriellen Anlagen verwendet.

Üblicherweise sind derartige Gasdruckregler mit einem Sicherheitsabsperrventil ausgerüstet, das bei Überschreitung eines eingestellten maximal zulässigen Ausgangsdrucks des Gases den Gasstrom eingangsseitig schließt und somit die Gasverbraucher ausgangsseitig vor Überdruck schützt. Wenn das Sicherheitsabsperrventil angesprochen hat, muss es von entsprechenden Fachleuten nach Überprüfung der Gasanlage wieder geöffnet werden, bevor der Verbraucher wieder Gas aus der Gasleitung beziehen kann.

Aufgrund von Umwelteinflüssen, beispielsweise Sonneneinstrahlung, kann die Gastemperatur ausgangsseitig steigen, wodurch auch ein Anstieg des Ausgangsdrucks des Gases bewirkt wird. Sofern die Steigerung des Ausgangsdrucks über den vorgeschriebenen Grenzwert steigt, spricht das Sicherheitsabsperrventil an und die Gasversorgung des Wohn- oder Bürogebäudes ist unterbrochen bis ein Fachmann nach Überprüfung der Anlage das Sicherheitsabsperrventil wieder öffnet.

Zur Vermeidung des Ansprechens des Sicherheitsabsperrventils aufgrund umweltbedingter Ausgangsdruckerhöhungen sind Gasdruckregler mit zusätzlichem Sicherheitsabblaseventil bekannt geworden. Ein derartiges Sicherheitsabblaseventil öffnet bei unerwünschtem ausgangsseitigen Druckanstieg automatisch und lässt eine beschränkte, geringe Gasmenge austreten um ein Ansprechen des Sicherheitsabsperrventils zu vermeiden.

Beispielsweise beschreibt die DE 10 2004 006 096 B3 einen Gasdruckregler mit einem solchen Sicherheitsabblaseventil, welches zweistufig ausgebildet und im Gasdruckregler integriert ist. Die integrierte Baueinheit bei der das Sicherheitsabsperrventil mit dem Sicherheitsabblaseventil verbunden ist, zeichnet sich durch eine relativ hohe Komplexität aus und lässt eine Nachrüstung bei bestehenden Gasdruckreglern nicht bzw. nur schwer zu.

Die EP 2 123 955 A1 zeigt einen Gasdruckregler der gegenständlichen Art mit einem Sicherheitsabblaseventil, das bei Überschreitung eines bestimmten Drucks den Überdruck abbläst. Nachteilig dabei ist, dass unzulässig große Gasmengen austreten könnten.

Die EP 772 109 A1 beschreibt einen zweistufigen Gasdruckregler mit Sicherheitsmembran, welcher kein Sicherheitsabblaseventil enthält.

Die Aufgabe der vorliegenden Erfindung besteht in der Schaffung eines oben genannten Gasdruckreglers, welcher möglichst einfach aufgebaut ist und eine Nachrüstung bestehender Gasdruckregler mit einem Sicherheitsabblaseventil zulässt. Nachteile bestehender Gasdruckregler sollen verhindert oder zumindest reduziert werden.

Gelöst wird die erfindungsgemäße Aufgabe dadurch, dass das Sicherheitsabblaseventil einen Ventilkörper mit einem Einlass und einen daran anschließenden Zwischenraum beinhaltet, wobei zwischen Einlass und Zwischenraum eine über eine Sollwertfeder vorgespannte Membran angeordnet ist, und der Zwischenraum mit einer Bohrung im Ventilkörper zum Abblasen des Gases im Falle eines Anstiegs des Ausgangsdrucks verbunden ist, und dass im Gehäuse eine Sicherheitsmembran angeordnet ist.

Das Sicherheitsabblaseventil besteht aus einem Ventilkörper mit einem Einlass und einem daran anschließenden Zwischenraum, wobei zwischen Einlass und Zwischenraum eine über eine Sollwertfeder vorgespannte Membran angeordnet ist. Über den Zwischenraum mit einer Bohrung im Ventilkörper strömt das Gas im Falle eines Anstiegs des Ausgangsdrucks nach außen. Diese Bauweise zeichnet sich durch relative Einfachheit und Robustheit aus.

Durch die im Gehäuse angeordnete Sicherheitsmembran kann ein Gasaustritt im Falle eines Risses der Arbeitsmembran des Gasdruckreglers verhindert werden.

Gemäß einem Ausführungsbeispiel ist das Sicherheitsabblaseventil über ein Verbindungselement mit einem Gewinde in einer Öffnung des Gehäuses mit einem entsprechenden Anschlussgewinde, angeordnet. Zwischen Verbindungselement und Gehäuse des Gasdruckreglers ist ein entsprechender Dichtungsring vorgesehen.

Die Bohrung im Ventilkörper weist vorzugsweise einen Durchmesser von 0,1 mm bis 0,4 mm, insbesondere 0,2 mm auf. Dieser Bohrungsdurchmesser verbunden mit dem maximalen oberen Auslösewert des Sicherheitsabsperrventils von 100 mbar stellt sicher, dass sie Abblasemenge maximal 30 Liter pro Stunde beträgt und somit auch in geschlossenen Räumlichkeiten (ohne Atmungsleitung ins Freie) abgeblasen werden kann.

Wenn der Ventilkörper gegenüber dem Verbindungselement verdrehbar und mit Hilfe einer Fixierschraube fixierbar ist, kann die Anordnung des Sicherheitsabblaseventils an die jeweiligen räumlichen Gegebenheiten einfach angepasst werden.

Wenn im Ventilkörper eine Einstellschraube zum Einstellen der Federkraft der Feder angeordnet ist, kann die voreingestellte Federkraft der Feder an den gewünschten Grenzwert des Ausgangsdrucks ab dem Gas abgeblasen wird, angepasst werden.

Dabei ist vor der Einstellschraube vorzugsweise ein Verschlusselement angeordnet. Um eine missbräuchliche oder irrtümliche Änderung des Abblasedrucks durch Verstellen der Einstellschraube verhindern zu können. Das Verschlusselement kann beispielsweise durch eine spezielle Schraube bzw. einem Deckel der allenfalls plombiert wird, gebildet sein.

Zumindest an einer Seite vorzugsweise beidseitig der Bohrung ist ein Feinfilter angeordnet, um die Bohrung gegen Verschmutzung zu schützen und eine Behinderung des Abblasens verhindern zu können. Der Feinfilter kann durch ein entsprechend feines Netz (geeignetes Filtermaterial) gebildet sein.

Die Erfindung wird anhand der beigefügten Zeichnungen näher erläutert. Darin zeigen:
- Fig. 1: eine Schnittzeichnung eines Gasdruckreglers mit daran ausgangsseitig angeordnetem Sicherheitsabblaseventil; und
- Fig. 2: ein Schnittbild einer Ausführungsform eines Sicherheits-abblaseventils für einen Gasdruckregler.

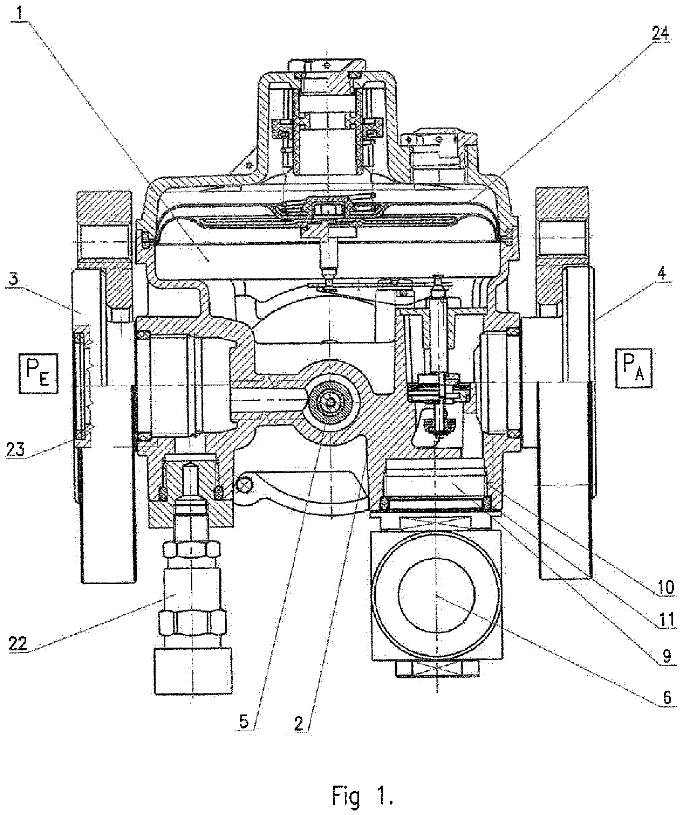

Fig. 1 zeigt eine Schnittzeichnung eines Gasdruckreglers 1, wie er für die Regelung eines Eingangsdrucks p_{E} von bis zu 10 bar auf einen konstanten Ausgangsdruck p_{A} verwendet wird. Der Gasdruckregler 1 beinhaltet ein Gehäuse 2, welches üblicherweise aus Aluminium oder einer Aluminiumlegierung im Druckgussverfahren hergestellt ist. Das Gehäuse 2 weist einen Eingang 3 mit entsprechendem Flansch zum Anschließen der Gasleitung auf (neben einem Flanschanschluss kann der Gasdruckregler 1 auch mit Gewindeanschlüssen ausgestattet werden). Am Eingang 3 weist das Gas einen Eingangsdruck p_{E} auf. Gegenüberliegend des Eingangs 3 ist ein Ausgang 4 angeordnet, an welchen die Gasleitung angeschlossen ist. Am Ausgang 4 herrscht der gewünschte konstante Ausgangsdruck p_{A} des Gases. Üblicherweise erfolgt die Regelung des Gasdrucks in zwei Stufen. Zwischen Eingang 3 und Ausgang 4 des Gasdruckreglers 1 ist ein Sicherheitsabsperrventil 5 angeordnet, welches bei Überschreitung eines unzulässigen Druckanstiegs anspricht und die Gaszufuhr eingangsseitig absperrt, um die Überschreitung des Gasdrucks am Ausgang 4 zu verhindern.

Zusätzlich ist ein Sicherheitsabblaseventil 6 vorgesehen , welches im gegenständlichen Fall ausgangsseitig am Gehäuse 2 des Gasdruckreglers 1 angeordnet ist. Diese Anordnung am Gehäuse 2 ermöglicht eine einfache und rasche Nachrüstung des Gasdruckreglers 1 mit einem entsprechenden Sicherheitsabblaseventils 6 und auch einen einfachen Tausch des Sicherheitsabblaseventils 6. Zu diesem Zweck ist im Gehäuse 2 eine Öffnung 9 vorgesehen und mit einem entsprechenden Anschlussgewinde 10 ausgestattet, über welches das Sicherheitsabblaseventil 6 angeschlossen werden kann. Zur Abdichtung ist ein Dichtungsring 11 vorgesehen.

Zusätzlich ist im Gehäuse 2 des Gasdruckreglers 1 eine Sicherheitsmembran 24 vorgesehen , durch welche ein Schutz vor Gasaustritt im Falle eines Risses der Membran des Gasdruckreglers 1 verhindert werden kann. Im Gehäuse 2 des Gasdruckreglers 1 kann weiters eine Prüföffnung 21 für einen Prüfanschluss 22 zum Messen des Eingangsdrucks P_{E} des Gases vorgesehen sein. Darüber hinaus kann am Eingang 3 des Gasdruckreglers 1 ein Sieb 23 angeordnet sein, welches verhindert, dass Verschmutzungen in den Gasdruckregler 1 bzw. die dem Gasdruckregler 1 nachgeordnete Gasleitung gelangen können.

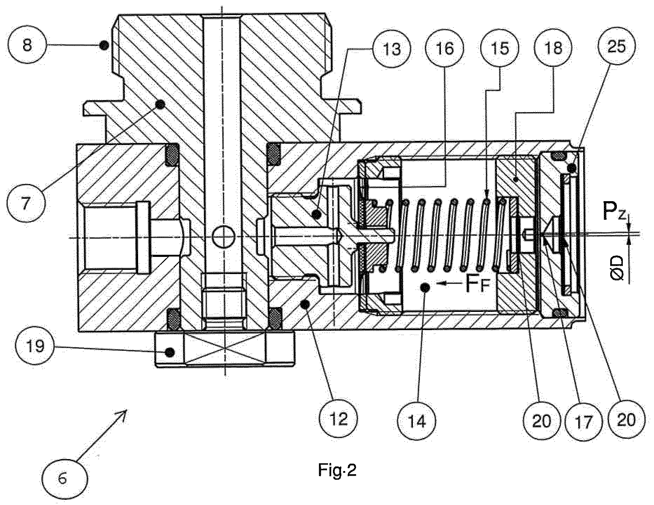

Fig. 2 zeigt ein Schnittbild einer Ausführungsform eines Sicherheitsabblaseventils 6 für einen Gasdruckregler 1 gemäß Fig. 1. Das Sicherheitsabblaseventil 6 wird über ein Verbindungselement 7 mit einem Gewinde 8, welches zum Anschlussgewinde 11 in der Öffnung 9 des Gehäuses 2 des Gasdruckreglers 1 passt, mit dem Gehäuse 2 des Gasdruckreglers 1 verbunden. Der Ventilkörper 12 des Sicherheitsabblaseventils 6 ist drehbar mit dem Verbindungselement 7 verbunden, sodass der Ventilkörper 12 des Sicherheitsabblaseventils 6 beliebig verdreht werden kann. Zum Fixieren des Ventilkörpers 12 gegenüber dem Verbindungselement 7 dient eine Fixierschraube 19. Im Ventilkörper 12 ist ein Einlass 13 für das ausgangsseitige Gas des Gasdruckreglers 1 angeordnet. Daran anschließend befindet sich ein Zwischenraum 14. Zwischen Einlass 13 und Zwischenraum 14 ist eine über eine Sollwertfeder 15 vorgespannte Membran 16 angeordnet. Übersteigt die Druckkraft des Gases im Bereich des Einlasses 13 die Federkraft F_{F} der Sollwertfeder 15, so wird die Membran 16 abgehoben und das Gas kann in den Zwischenraum 14 des Ventilkörpers 12 gelangen. Im Ventilkörper 12 ist eine Bohrung 17 angeordnet. Über die Bohrung 17 gelangt das Gas vom Zwischenraum 14 nach außen. Zur Einstellung der Federkraft F_{F} ist eine Einstellschraube 18 angeordnet, die über ein Verschlusselement 25 vor missbräuchlicher oder irrtümlicher Betätigung geschützt wird. Die entsprechenden Verschlüsse werden mit entsprechenden Dichtungsringen abgedichtet. Im dargestellten Fall ist die Bohrung 17 nicht im Ventilkörper 12 selbst sondern im Verschlusselement 25 angeordnet. Die Bohrung 17 weist einen Durchmesser D von vorzugsweise 0,1 mm bis 0,4 mm, insbesondere 0,2 mm auf, wodurch in Zusammenhang mit dem oberen Auslösewert des Sicherheitsabsperrventils 5 von 100mbar eine Überschreitung der maximal zulässigen Abblasemenge verhindert wird. Bestehende Normen fordern eine Beschränkung der maximalen Abblasemenge von 30 Litern pro Stunde. Um die Bohrung 17 vor Verschmutzung zu schützen, können zumindest an einer Seite, vorzugsweise an beiden Seiten der Bohrung 17 Feinfilter 20 angeordnet werden.

## Patentansprüche

1. Gasdruckregler (1) zur Reduktion des Eingangsdrucks (p_{E}) eines Gases auf einen konstanten Ausgangsdruck (p_{A}), mit einem Gehäuse (2) mit einem Eingang (3), einem Ausgang (4) und einem dazwischen angeordneten Sicherheitsabsperrventil (5), und mit einem ausgangsseitig am Gehäuse (2) angeordneten Sicherheitsabblaseventil (6), **dadurch gekennzeichnet, dass** das Sicherheitsabblaseventil (6) einen Ventilkörper (12) mit einem Einlass (13) und einem daran anschließenden Zwischenraum (14) beinhaltet, wobei zwischen Einlass (13) und Zwischenraum (14) eine über eine Sollwertfeder (15) vorgespannte Membran (16) angeordnet ist, wobei im Ventilkörper (12) eine Einstellschraube (18) zum Einstellen der Federkraft (F_{F}) der Feder (15) und vor der Einstellschraube (18) ein Verschlusselement (25) angeordnet ist, und wobei der Zwischenraum (14) mit einer Bohrung (17) im Ventilkörper (12) oder im Verschlusselement (25) zum Abblasen des Gases im Falle eines Anstiegs des Ausgangsdrucks (p_{A}) verbunden ist, und im Gehäuse (2) eine Sicherheitsmembran (24) angeordnet ist.

2. Gasdruckregler (1) nach Anspruch 1, **dadurch gekennzeichnet, dass** das Sicherheitsabblaseventil (6) über ein Verbindungselement (7) mit einem Gewinde (8) in einer Öffnung (9) des Gehäuses (2) mit einem entsprechenden Anschlussgewinde (10), allenfalls mit einem Dichtungsring (11), angeordnet ist.

3. Gasdruckregler (1) nach Anspruch 1 oder 2, **dadurch gekennzeichnet, dass** die Bohrung (17) im Ventilkörper (12) einen Durchmesser (D) von 0,1 mm bis 0,4 mm, insbesondere 0,2 mm aufweist.

4. Gasdruckregler (1) nach einem der Ansprüche 1 bis 3, **dadurch gekennzeichnet, dass** der Ventilkörper (12) gegenüber dem Verbindungselement (7) verdrehbar und mit Hilfe einer Fixierschraube (19) fixierbar ist.

5. Gasdruckregler (1) nach einem der Ansprüche 1 bis 4, **dadurch gekennzeichnet, dass** zumindest an einer Seite der Bohrung (17) ein Feinfilter (20) angeordnet ist.

## Claims

1. A gas pressure regulator (1) for reducing the input pressure (p_{E}) of a gas to a constant output pressure (p_{A}), comprising a housing (2) with an inlet (3), an outlet (4), and a safety shut-off valve (5) disposed in between, and a safety relief valve (6) disposed at the outlet side of the housing (2), **characterized in that** the safety relief valve (6) comprises a valve body (12) with an inlet (13) which is followed by an interspace (14), wherein a membrane (16) biased by a set-point spring (15) is disposed between the inlet (13) and the interspace (14), wherein an adjustment screw (18) for adjusting the spring force (F_{F}) of the spring (15) is disposed in the valve body (12) and a closure member (25) is disposed upstream of the adjustment screw (18), and wherein the interspace (14) is connected with a bore (17) in the valve body (12) or in the closure member (25) for discharging the gas in the case of increase of the output pressure (p_{A}), and a safety membrane (24) is disposed in the housing (2).

2. The gas pressure regulator (1) according to claim 1, **characterized in that** the safety relief valve (6) is disposed via a connecting member (7) with a thread (8) in an opening (9) of the housing (2) with a corresponding connecting thread (10), if need be with a sealing ring (11).

3. The gas pressure regulator (1) according to claim 1 or 2, **characterized in that** the bore (17) in the valve body (12) has a diameter (D) of 0.1 mm to 0.4 mm, in particular 0.2 mm.

4. The gas pressure regulator (1) according to any of claims 1 to 3, **characterized in that** the valve body (12) is rotatable relative to the connecting member (7) and fixable by means of a fixing screw (19).

5. The gas pressure regulator (1) according to any of claims 1 to 4, **characterized in that** a fine filter (20) is disposed at least on one side of the bore (17).

## Revendications

1. Régulateur de pression de gaz (1) pour réduire la pression d'entrée (p_{E}) d'un gaz à une pression de sortie (p_{A}) constante, avec un boîtier (2) avec une entrée (3), une sortie (4) et une soupape d'arrêt de sécurité (5) disposée en position intermédiaire, et avec une soupape d'évacuation de sécurité (6) disposée côté sortie sur le boîtier (2), **caractérisé en ce que** la soupape d'évacuation de sécurité (6) contient un corps de soupape (12) avec une admission (13) et un espace intermédiaire (14) qui s'y raccorde, une membrane (16) prétendue par le biais d'un ressort de consigne (15) étant disposée entre l'admission (13) et l'espace intermédiaire (14), une vis de réglage (18) étant disposée dans le corps de soupape (12) pour le réglage de la force de ressort (F_{F}) du ressort (15), et un élément de fermeture (25) étant disposé devant la vis de réglage (18), et l'espace intermédiaire (14) étant raccordé à un alésage (17) dans le corps de soupape (12) ou dans l'élément de fermeture (25) pour l'évacuation du gaz en cas d'augmentation de la pression de sortie (p_{A}), et une membrane de sécurité (24) étant disposée dans le boîtier (2).

2. Régulateur de pression de gaz (1) selon la revendication 1, **caractérisé en ce que**, par le biais d'un élément de raccordement (7) avec un filetage (8), la soupape d'évacuation de sécurité (6) est disposée dans une ouverture (9) du boîtier (2) avec un filetage de raccordement (10) correspondant, éventuellement avec une bague d'étanchéité (11).

3. Régulateur de pression de gaz (1) selon la revendication 1 ou 2, **caractérisé en ce que** l'alésage (17) dans le corps de soupape (12) présente un diamètre (D) de 0,1 mm à 0,4 mm, en particulier de 0,2 mm.

4. Régulateur de pression de gaz (1) selon l'une des revendications 1 à 3, **caractérisé en ce que** le corps de soupape (12) peut être tourné par rapport à l'élément de raccordement (7) et peut être fixé à l'aide d'une vis de fixation (19).

5. Régulateur de pression de gaz (1) selon l'une des revendications 1 à 4, **caractérisé en ce qu'**un filtre fin (20) est disposé au moins sur un côté de l'alésage (17).
